# FASCICULE DE BREVET EUROPEEN

(11) **EP 1 152 845 B1**
(45) Date de publication et mention de la délivrance du brevet: **08.01.2003**
(21) Numéro de dépôt: 00905134.3
(22) Date de dépôt: 15.02.2000
(51) Int. Cl.: B21D 39/03, A47J 27/20

(54) **PROCEDE D'ASSEMBLAGE DE TOLES ET STRUCTURE RIGIDE OBTENUE PAR LEDIT PROCEDE**
VERBINDUNGSVERFAHREN VON BLECHEN UND DADURCH HERGESTELLTE STARRENSTRUKTUR
METHOD FOR ASSEMBLING SHEET METALS AND RIGID STRUCTURE OBTAINED BY SAID METHOD

(30) Priorité: 16.02.1999 FR 9901839
(43) Date de publication de la demande: 14.11.2001
(73) Titulaire: ARMOR INOX SA, F-56430 Mauron (FR)
(72) Inventeur: DREANO, Claude, F-56430 Mauron (FR); JAGOREL, Loic, F-56430 Mauron (FR)
(74) Mandataire: Geismar, Thierry
(86) Numéro de dépôt international: FR0000366
(87) Numéro de publication internationale: WO00048764

(56) Documents cités:
- WO-A-93/14893
- FR-A- 1 518 878
- FR-A- 2 601 653
- FR-A- 2 669 004
- GB-A- 926 407
- US-A- 2 335 181
- US-A- 2 630 175
- US-A- 3 343 821
- US-A- 4 276 242

## Description

La présente invention se rapporte principalement à un procédé d'assemblage de tôles selon le préambule de la revendication 1, de préférence de tôles métalliques obtenues par laminage.

Un tel assemblage est connu du document US-A-2 630 175 qui décrit un agencement conforme au préambule de la revendication 1.

Il est habituel de déposer des jambons à cuire, emballés ou non dans des sacs en matière plastique, dans des ustensiles de cuisson empilables, comprenant une pluralité de goulottes parallèles assurant le maintien des jambons durant la cuisson, d'empiler les ustensiles et de disposer la pile d'ustensiles garnie de jambons à cuire dans une cellule de cuisson dans laquelle on fait pénétrer un fluide colporteur de calories. Les goulottes éventuellement associées à des couvercles confèrent aux jambons la forme désirée.

Ces ustensiles de cuisson comportent des tôles d'acier inoxydable mises en forme mécaniquement et assemblées par soudure. Ces tôles doivent être positionnées et maintenues dans la configuration désirée pendant les opérations de leur solidarisation par soudure. Ainsi, ces opérations (positionnement, maintien et soudure) sont effectuées manuellement ce qui grève le prix de revient d'un tel ustensile de cuisson. De plus, toute imprécision dans le positionnement entraîne une variation de la géométrie des ustensiles dont l'empilement devient plus difficile.

C'est par conséquent un but de la présente invention d'offrir un procédé de réalisation de structure rigide réalisée principalement en tôles, notamment un procédé de réalisation d'un ustensile de cuisson industrielle d'aliments ou d'un élément d'un tel ustensile de cuisson, assurant l'immobilisation des tôles à assembler par soudure et/ou brasure avant et pendant cette étape de soudure et/ou de brasure dans une position relative correspondant à la position relative desdites tôles après la solidarisation définitive par soudure et/ou brasure.

La présente invention a également pour but d'offrir un tel procédé facile à mettre en oeuvre et susceptible d'être exécuté par un personnel peu qualifié.

C'est aussi un but de la présente invention d'offrir un tel procédé automatisable et/ou automatisé. Notamment, la mise en forme telle que découpe et pliage sont avantageusement réalisés automatiquement. De même, c'est également un but de la présente invention d'offrir un tel procédé assurant la soudure automatique par un robot de soudure.

C'est également un but de la présente invention d'offrir une structure rigide de grande précision, notamment un ustensile de cuisson industrielle d'aliments.

C'est aussi un but de la présente invention d'offrir des ensembles de structure rigide identiques adaptables les unes aux autres, notamment empilables avec de très faibles variations dimensionnelles d'une structure à une autre, de manière à en faciliter l'assemblage, notamment l'empilement.

Ces buts sont atteints par un procédé selon la présente invention tel que défini dans la revendication 1. Des caractéristiques préférées sont définies dans les revendications dépendantes.

L'assemblage selon la présente invention est particulièrement efficace pour des tôles perpendiculaires.

L'invention sera mieux comprise au moyen de la description ci-après et des figures annexées, données comme des exemples, et sur lesquelles :
- la figure 1 est une vue en perspective d'un premier exemple de réalisation d'une structure selon le procédé de la présente invention mettant en oeuvre un élément saillant coopérant avec une ouverture traversant l'épaisseur d'une tôle ;
- la figure 2 est une vue en plan du dispositif de la figure 1 ;
- la figure 3 est une vue de face de la structure de la figure 1 ;
- la figure 4 est une vue en perspective d'un deuxième exemple de réalisation d'une structure selon le procédé de la présente invention mettant en oeuvre un élément saillant coopérant avec une encoche débouchant sur un des bords d'une des tôles ;
- la figure 5 est une vue en coupe d'un troisième exemple de réalisation mettant en oeuvre un élément saillant coopérant avec une cavité de type trou borgne ;
- la figure 6 est une vue en perspective d'une réalisation du premier exemple de structure selon le procédé de la présente invention ;
- la figure 7 est une vue en perspective d'une réalisation du deuxième exemple de structure selon le procédé de la présente invention ;
- la figure 8 est une vue à plat d'une tôle de goulotte susceptible d'être mise en oeuvre pour réaliser la structure de la figure 6 ;
- la figure 9 est une vue d'une extrémité de la goulotte de la figure 8 après la réalisation de pliage ;
- la figure 10 est une vue en élévation d'une tôle de maintien des goulottes d'un cadre externe de la structure de la figure 6 ;
- la figure 11 est une vue en élévation d'une tôle de maintien des cloisons transversales d'un cadre périphérique de la structure de la figure 6 ;
- la figure 12 est une vue en élévation d'une cloison de la structure de la figure 6 ;
- la figure 13 est une vue à plat d'une tôle de goulotte susceptible d'être mise en oeuvre pour réaliser la structure de la figure 7 ;
- la figure 14 est une vue d'une extrémité de la goulotte de la figure 13 après la réalisation du pliage ;
- la figure 15 est une vue en élévation d'une tôle de maintien des goulottes d'un cadre externe de la structure de la figure 7 ;
- la figure 16 est une vue en élévation d'une tôle de maintien des cloisons transversales d'un cadre périphérique de la structure de la figure 7 ;
- la figure 17 est une vue en élévation d'une cloison de la structure de la figure 7 ;
- la figure 18 est une vue en plan d'un quart d'un exemple préféré de réalisation d'une structure rigide par un procédé selon la présente invention de type ustensile de cuisson industrielle d'aliments ;
- la figure 19 est une vue de face de la structure de la figure 18 ;
- la figure 20 est une vue de côté de la structure de la figure 18.
- la figure 21 est une vue en perspective d'un détail d'une variante de réalisation de l'exemple préféré de réalisation d'un ustensile de cuisson industrielle d'aliments par un procédé selon l'invention.

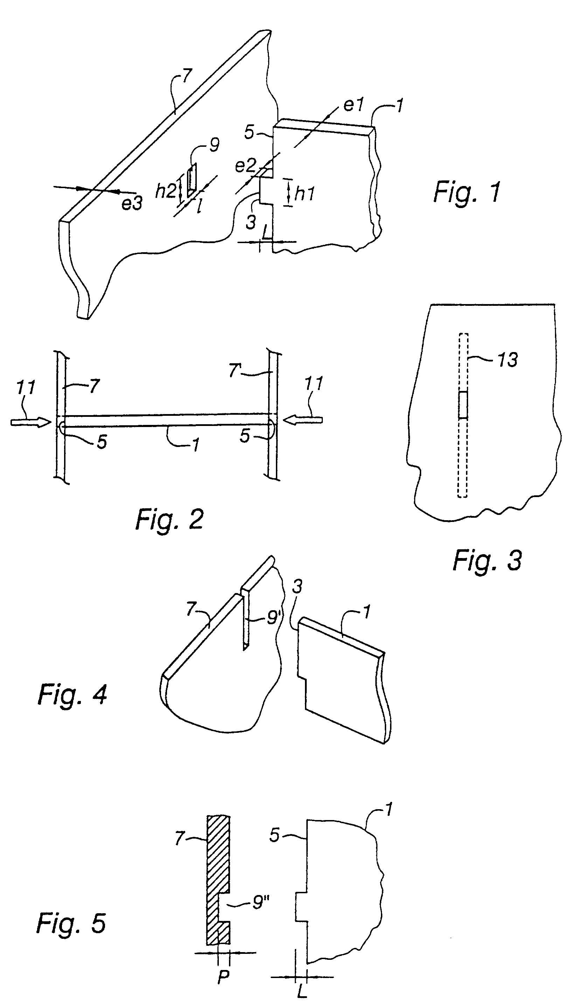

Sur les figures 1 à 21, on a utilisé les mêmes références pour désigner les mêmes éléments.

Sur la figure 1, on peut voir une première tôle 1, par exemple en acier inoxydable, munie à une de ses extrémités d'un élément saillant 3. Dans l'exemple préféré illustré, l'élément saillant est un parallélépipède rectangle ayant une longueur L, et une hauteur h1 et une épaisseur e2, avantageusement égale à l'épaisseur e1 de la tôle 1. L'élément saillant 3 est avantageusement disposé dans le prolongement de l'extrémité 5 de la tôle 1 qui le porte. Toutefois, il est bien entendu que la mise en oeuvre de l'élément saillant 3 ayant d'autres formes comme par exemple des éléments saillants pointus, c'est-à-dire dont la hauteur, la longueur et/ou l'épaisseur se réduit au fur à mesure que l'on s'éloigne du bord 5 pour aller vers l'extrémité de l'élément saillant 3, ne sort pas du cadre de la présente invention. De tels éléments saillants 3 sont plus faciles à centrer. Toutefois, il n'est pas aisé d'obtenir un positionnement particulièrement précis avec de tels éléments saillants.

Une deuxième tôle 7 d'épaisseur e3 est munie d'une ouverture 9 de réception d'éléments saillant 3. Dans l'exemple avantageux illustré, la géométrie de l'ouverture 9 est complémentaire de celle de l'élément saillant 3. L'ouverture 9 a, par exemple, la forme d'un parallélépipède rectangle. La largeur l de l'ouverture 9 est très légèrement supérieure à l'épaisseur e2 de l'élément saillant 3. La hauteur h2 de l'ouverture 9 est, avantageusement. très légèrement supérieure à la hauteur h1 de l'élément saillant 3. Ainsi, il est possible d'insérer, de préférence à force, l'élément saillant 3 dans l'ouverture 9. l-e2 est par exemple égal à 3 mm. h2-h1 est par exemple égal à 0,2 mm. De plus, il est possible, sans sortir du cadre de la présente invention, de refroidir l'élément saillant 3 et/ou de chauffer la tôle 7 autour de l'ouverture 9 pour faciliter cette insertion. Bien que la mise en oeuvre d'élément saillant 3 dont la longueur L est supérieure à l'épaisseur e3 de la tôle 7 ne sort pas du cadre de la présente invention, il est avantageux de mettre en oeuvre des éléments saillants 3 dont la longueur est égale, ou, de préférence, inférieure à l'épaisseur e3 de la tôle 7. Ainsi, l'élément saillant 3 ne dépasse pas de la tôle 7 qui peut offrir une surface sensiblement lisse. L'élément saillant 3 a une rigidité suffisante pour permettre de soutenir la tôle 1 qui, après assemblage, repose sur la tôle 7.

Dans l'exemple illustré sur la figure 2, la tôle 1 est munie d'au moins un élément saillant 3 à chacune de ses extrémités 5 permettant l'assemblage avec une tôle 7 et une tôle 7' parallèles entre elles et perpendiculaires à la tôle 1.

L'ouverture 9 et l'élément saillant 3 sont disposés de manière à permettre l'assemblage de la tôle 1 par rapport aux tôles 7 et 7' dans une position désirée, par exemple pour réaliser une structure rigide telle qu'un ustensile de cuisson industrielle d'aliments. Lorsque l'élément saillant 3 a pénétré dans l'ouverture 9, on effectue la solidarisation de la tôle 1 avec la tôle 7 et/ou 7' par soudure Avantageusement, la soudure s'effectue par transparence, c'est-à-dire de l'extérieur selon les flèches 11. La grande précision du positionnement de la tôle 1 par rapport à la tôle 7 permet une soudure par transparence au laser selon les flèches 11 à partir de l'extérieur, en mettant par exemple en oeuvre un automate de soudure programmable. L'automate balaie tout ou partie d'une surface 13 correspondant à la zone de contact de l'extrémité 5 de la tôle 1 avec la tôle 7. En variante, si L < e3, on remplit de soudure la cavité formée par l'extrémité externe de l'ouverture 9 ou d'une encoche 9' (figure 4), on porte cette soudure à la température de fusion pour effectuer la soudure dite "par bouchonnage"

II est bien entendu que la présente invention n'est pas limitée à la mise en oeuvre de la tôle 7 comportant des ouvertures traversantes 9 mais s'étend aux tôles 7 comportant des encoches 9' telles qu'illustrées sur la figure 4 ou des trous borgnes 9" tels qu'illustrés sur la figure 5.

L'encoche 9' présente l'avantage de pouvoir insérer la tôle 1 non seulement par son extrémité, mais également de haut en bas. Elle présente l'inconvénient de ne pas permettre un positionnement vertical aussi précis que la solution des figures 1 à 3. La longueur L de l'élément saillant 3 a avantageusement une longueur inférieure ou égale à l'épaisseur de la tôle 7.

La mise en oeuvre d'un trou borgne 9" tel qu'illustré sur la figure 5 présente l'avantage d'offrir une face de la tôle 7 opposée à la tôle 1 parfaitement lisse. Elle présente l'inconvénient d'un usinage du trou borgne 9" qui peut s'avérer coûteux. Pour permettre le contact entre la zone d'extrémité 5 de la tôle 1 avec la face de la tôle 7 portant l'ouverture 2", la longueur L de l'élément saillant 3 est légèrement inférieure ou égale à la profondeur P du trou borgne 9".

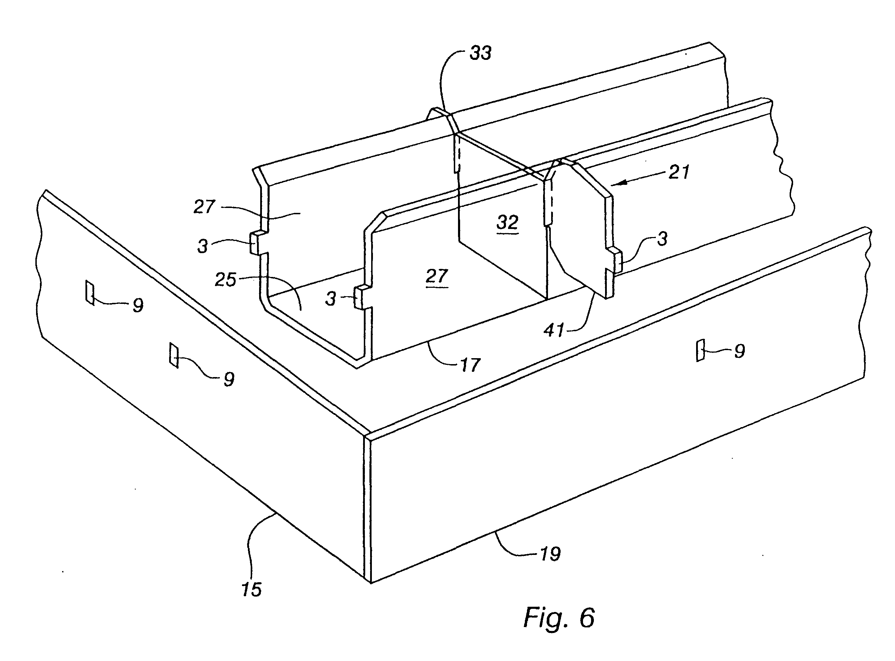

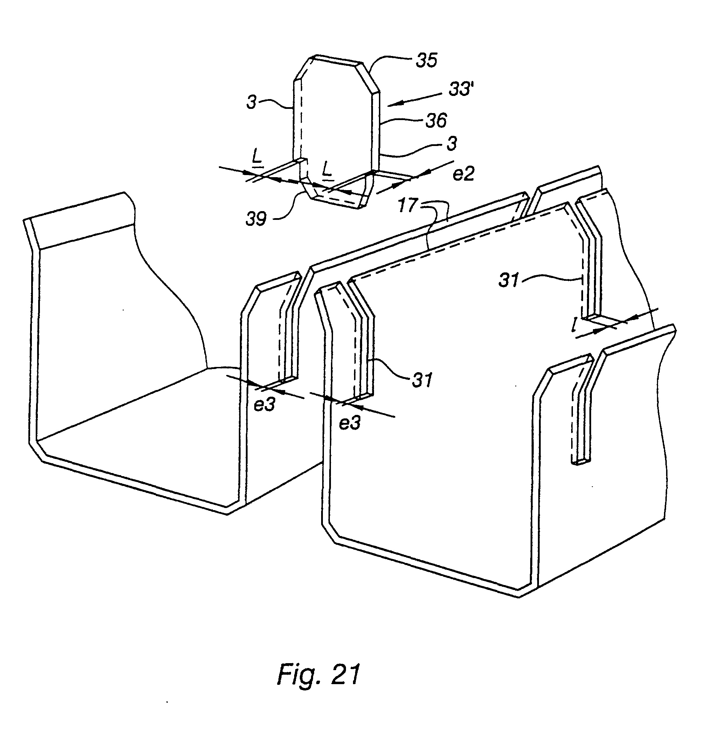

Sur la figure 6, on a représenté schématiquement un outil de cuisson industrielle d'aliments, notamment de jambons, comportant un cadre périphérique avantageusement rectangulaire composé deux tôles 15 d'extrémité des goulottes 17 parallèles entre elles et de deux tôles 19 perpendiculaires aux tôles 15. La tôle 15 comporte des ouvertures 9 de réception d'élément saillants 3 disposées aux extrémités des goulottes 17 alors que, avantageusement, la tôle 19 comporte des ouvertures 9 de réception d'élément saillants 3 des plaques transversales 21 telles que cloisons divisant les goulottes 17 en plusieurs tronçons de plus faibles longueurs. En variante, les plaques transversales 21 sont disposées sous les goulottes de manière à permettre la cuisson de jambons barres dont la longueur est égale à celle d'une goulotte. Des ustensiles de cuisson industrielle d'aliments dépourvus de plaques transversales 21, tel qu'illustré sur la figure 21, peuvent être réalisés.

L'assemblage de l'ustensile de cuisson industrielle d'aliments de la figure 6 s'effectue avantageusement de la manière suivante :

Tout d'abord on dispose parallèlement toutes les goulottes (par exemple au nombre de 8) de l'ustensile de cuisson. On dispose les éventuelles plaques transversales 21 sur l'ensemble des goulottes parallèles. Si nécessaire, on utilise un maillet ou analogue pour faire pénétrer les parois transversales 21 dans les goulottes.

On applique les tôles 15 aux extrémités des goulottes 17 en faisant pénétrer, avec un maillet si nécessaire, les éléments saillants 3 dans les ouvertures 9 des tôles 15. On applique les tôles 19 aux extrémités des plaques transversales 21 dont on fait pénétrer les éléments 3 dans les ouvertures 9 de la tôle 19. On effectue la soudure ou la brasure, avantageusement avec un robot de soudure automatique à commande numérique des extrémités 5 de goulottes 17 sur la tôle d'extrémité 15 et des extrémités de plaques transversales 21 sur la tôle d'extrémité 19. Il est à noter que l'introduction des éléments saillants 3 dans les ouvertures 9 assure un positionnement précis des extrémités de goulottes. Ainsi, pour assurer l'opération d'assemblage, il suffit de programmer la trajectoire de l'outil de soudure ou de brasure du robot de soudure correspondant à la position de la surface de contact entre l'extrémité de la goulotte 17 et la tôle 15 ou entre l'extrémité de la plaque transversale 21 et de la tôle 19. On soude les extrémités des tôles 15 avec celles des tôles 19. On solidarise les divers équipements (non représentés) tels que pieds, poignées de manutention, couvercles et analogues.

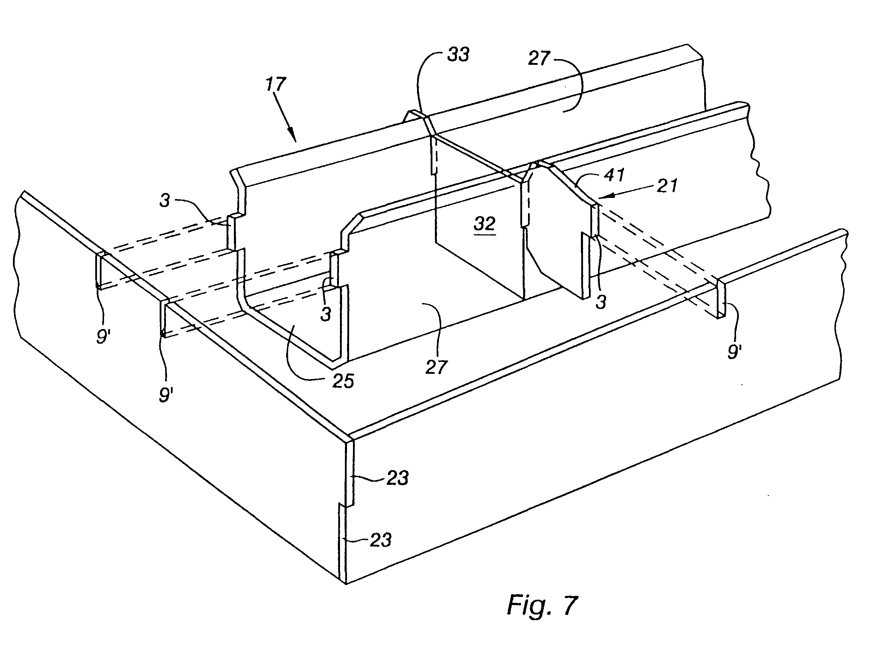

Sur la figure 7, on peut voir une représentation schématique d'un ustensile de cuisson industrielle d'aliments qui diffère de l'ustensile de la figure 6 en ce que les tôles d'extrémité 15 et 19 sont munies d'encoches 9' débouchant, dans l'exemple non limitatif illustré, sur la face supérieure du cadre formé par ces tôles. L'ustensile de cuisson industrielle d'aliments de la figure 7 peut être assemblé de manière analogue à celui de la figure 6. En variante, on réalise tout d'abord un cadre périphérique en soudant les extrémités des tôles 15 et 19, avantageusement munies d'éléments saillants complémentaires 23. D'autre part, on assemble par emboîtement les goulottes 17 avec les plaques transversales 21 puis on introduit cet ensemble, à partir du haut , dans le cadre périphérique.

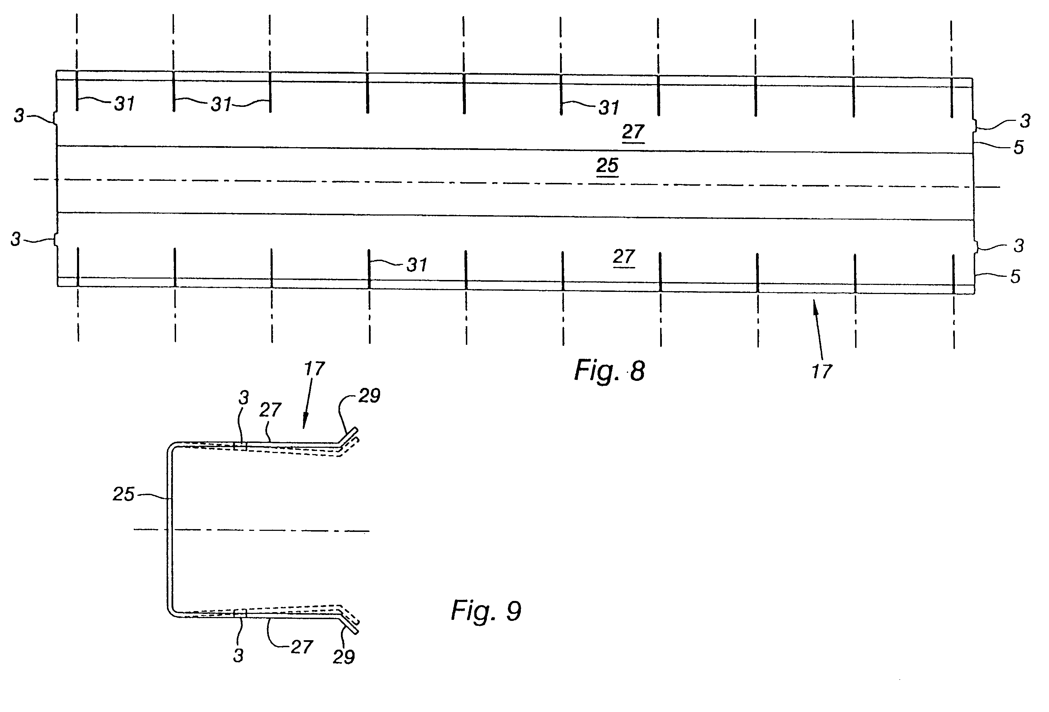

Les découpes des tôles des figures 8 à 17 sont par exemple effectuées à l'aide d'un robot de découpe à laser au CO₂ ou à l'azote.

Les soudures sont effectuées à l'aide d'un robot de soudure

Les tôles mises en oeuvre pour réaliser l'ustensile de cuisson industrielle d'aliments selon la présente invention sont par exemple des tôles d'acier inoxydable AISI 304 ou AISI 304L.

Sur les figures 8 et 9, on peut voir l'exemple préféré de réalisation d'une goulotte à section carrée susceptible d'être mise en oeuvre à un ustensile de cuisson industrielle de jambons.

La goulotte 17 de l'exemple illustré est une goulotte à section sensiblement rectangulaire comportant un fond plat 25 horizontal en condition d'utilisation, de flans 27 perpendiculaires par rapport au fond 25 et une ouverture évasée 29 de chargement des jambons. Chaque extrémité 5 d'une goulotte porte au moins un, de préférence deux, ou au plus éléments saillants 3. Dans l'exemple avantageux illustré, chaque extrémité 5 d'un flan 27 porte un élément saillant 3 rectangulaire (vu en plan). La goulotte 17 peut comporter des paires d'encoches 31 disposées en vis à vis sur les flans 27 permettant de recevoir des plaques transversales 21 notamment des cloisons délimitant des compartiments de réception de jambons. Dans l'exemple non limitatif illustré, la goulotte 17 comporte dix paries d'encoches 31, étant bien entendu qu'un nombre inférieur d'encoches 31, et par suite de cloisons 21 permet de cuire des jambons de plus grande longueur.

La goulotte 17 présente une certaine élasticité transversale permettant lors de l'introduction des éléments saillants 3 dans les ouvertures 9 de faire varier la distance entre les flans 27 jusqu'à l'obtention de la géométrie désirée. Un pincement des flans 27 est illustré en pointillé sur la figure 9.

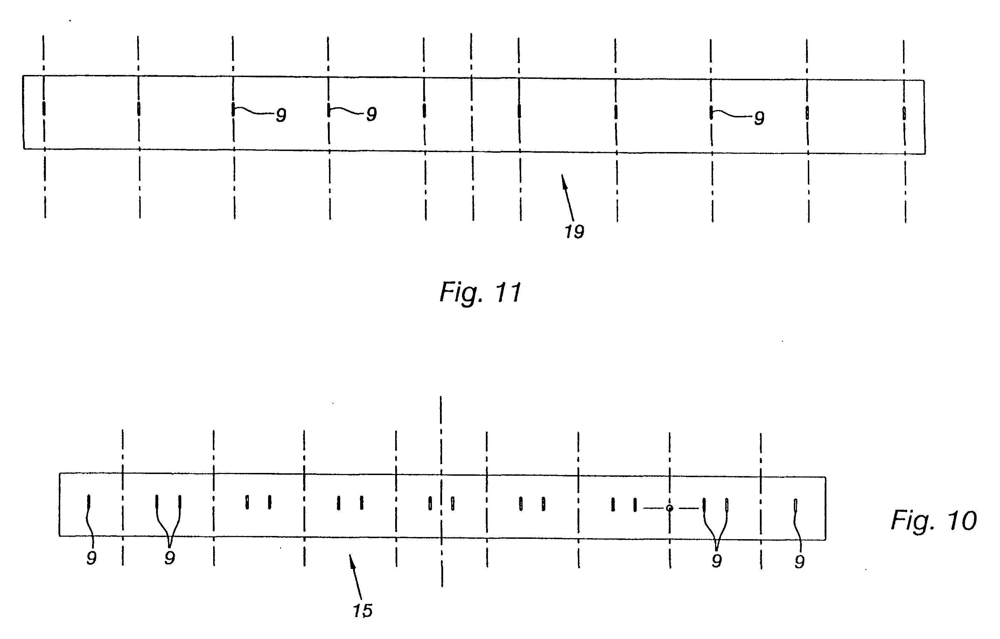

Sur la figure 10, on peut voir une tôle 15 rectangulaire comportant des ouvertures 9 de réception des éléments saillants 3 d'une pluralité de goulottes 17 des figures 8 et 9. Avantageusement, toutes les ouvertures 9 sont alignées. Deux ouvertures 9 correspondant à une même goulotte sont éloignées d'une distance correspondant à la largeur de la goulotte alors que deux ouvertures 9 correspondant à deux goulottes consécutives présentent une distance suffisante pour ménager entre ces goulottes une cheminée de circulation du fluide colporteur de calories de manière à favoriser l'homogénéisation de la température lors de la cuisson.

Sur la figure 11, on peut voir une plaque rectangulaire 19 comportant des ouvertures 9 de réception des éléments saillants 3 des cloisons transversales 21.

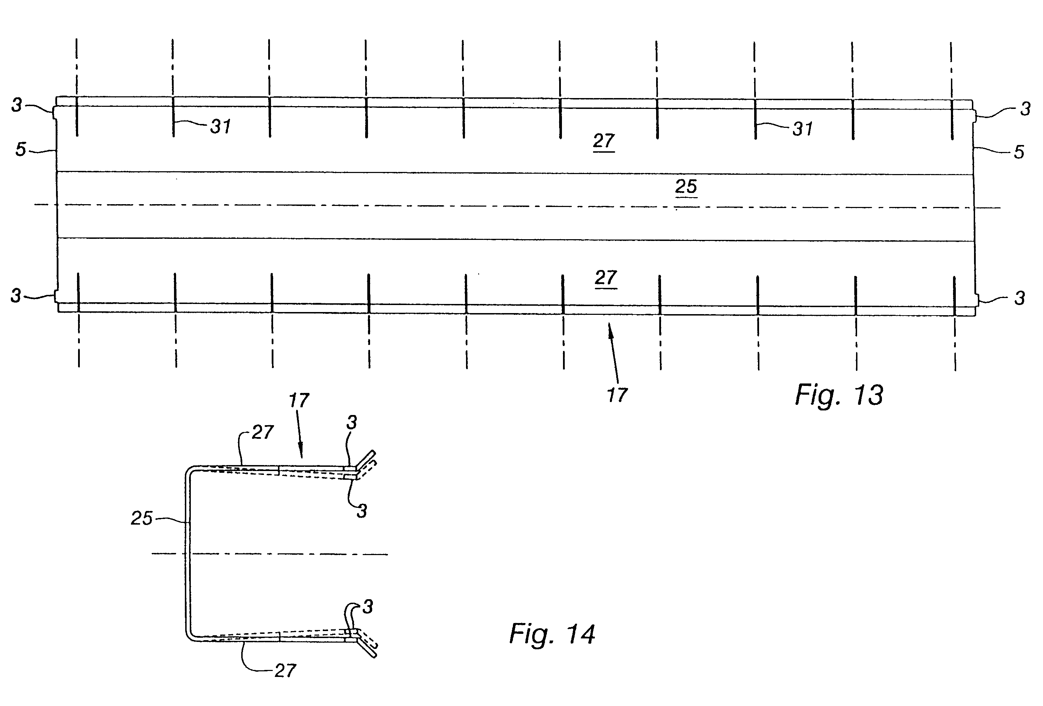

Sur la figure 12, on peut voir une cloison transversale 21 comportant une succession d'éléments rectangulaires 32 pénétrant dans les goulottes 17 séparés par des éléments intermédiaires 33. La partie supérieure d'un élément intermédiaire 33 comporte des rampes 35 soutenant la partie évasée 29 des goulottes. La partie inférieure d'un élément intermédiaire 33, comporte deux encoches 37 susceptibles de s'emboîter dans les encoches 31 des deux goulottes successives. Avantageusement, les rampes inclinées 39 conduisent aux encoches 37 facilitant l'emboîtement. Chaque extrémité 41 d'une cloison transversale 21 comporte un élément saillant 3 susceptible de s'emboîter dans une ouverture 9 d'une plaque 19 de la figure 11.

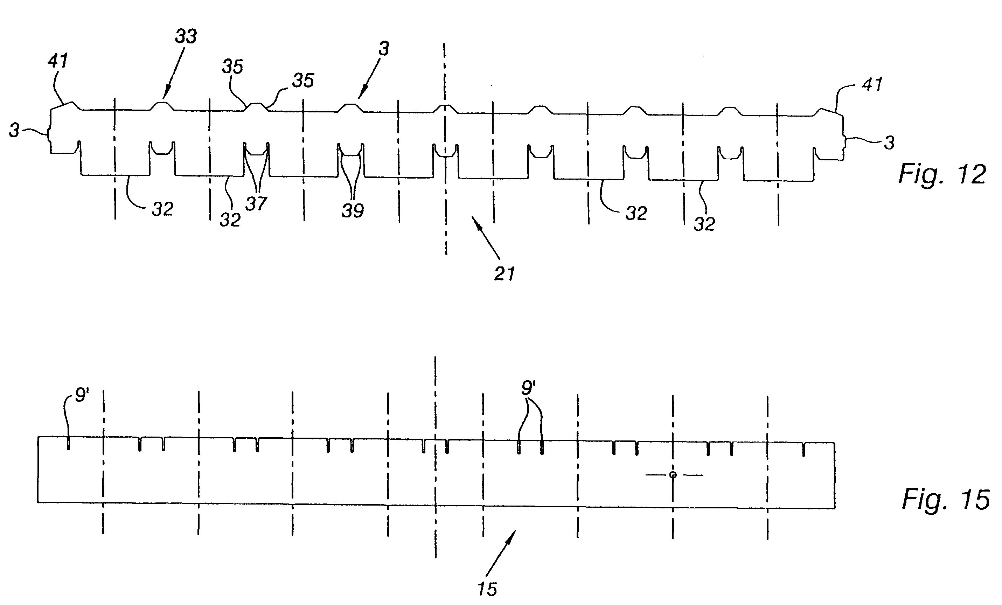

Sur les figures 13 et 14, on peut voir une variante de réalisation d'une goulotte 17 selon la présente invention qui diffère de la goulotte 17 représentée sur les figures 8 et 9, en ce que les éléments saillants 3 s'étendent à partir du rebord supérieur des flans 27 de manière à s'adapter aux encoches 9' débouchant sur le bord supérieur de la tôle 15 de la figure 15. Les encoches 9' de la tôle 15 de la figure 15 présentent la même répartition longitudinale que les ouvertures 9 de la tôle 15 de la figure 10.

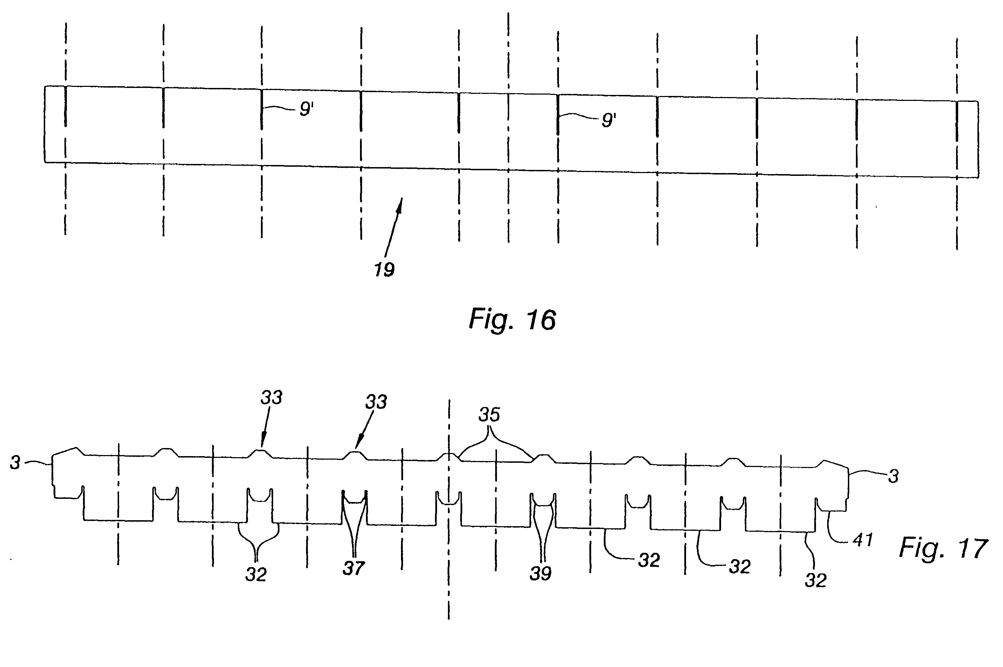

La tôle 19 de la figure 16 diffère de la tôle 19 de la figure 11 uniquement en ce que les ouvertures 9 ont été remplacées par des encoches 9' débouchant sur le bord supérieur de cette tôle. Ainsi, elle peut recevoir les éléments saillants 3 situés dans la partie supérieure des extrémités 41 de la plaque transversale 21 de la figure 17 qui, par ailleurs, présente la même configuration que la cloison transversale 21 de la figure 12.

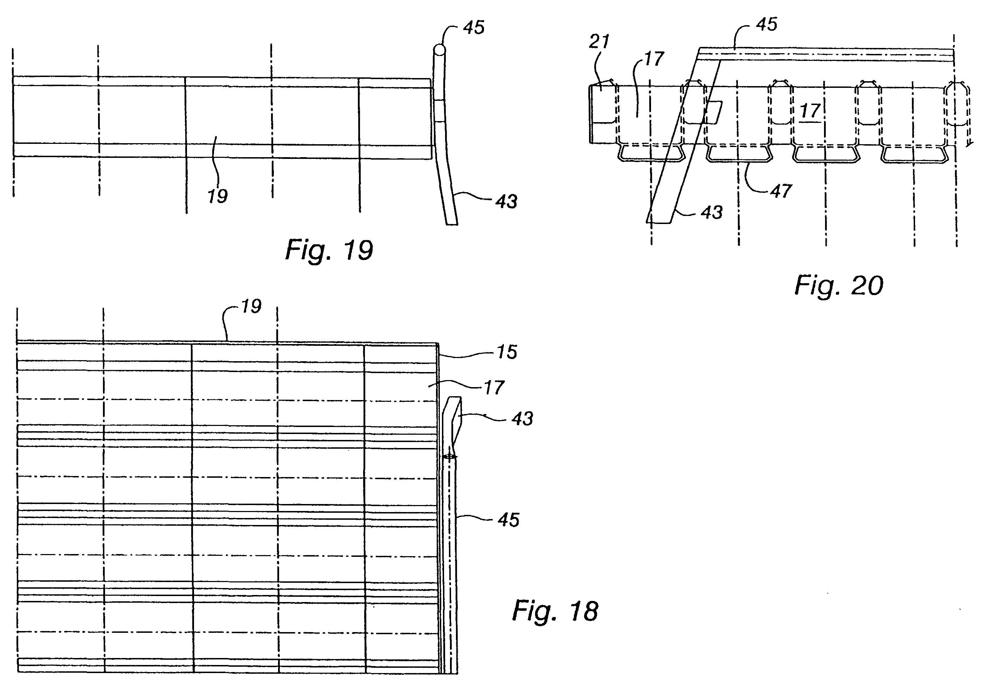

L'ustensile de cuisson industrielle illustré sur les figures 18 à 20 peut comporter d'autres équipements tels que des pieds 43 soudés aux tôles 15 ou 19. Avantageusement, chaque ensemble des pieds disposés sur un côté de l'ustensile selon la présente invention est relié, dans sa partie supérieure en position d'utilisation, par une barre ou tube 45 facilitant la manipulation de l'ustensile. Avantageusement, les pieds 43 ont une forme évasée vers le bas facilitant le centrage des ustensiles les uns au-dessus des autres lors de leur empilement. L'ustensile de cuisson industrielle d'aliments, notamment de jambons selon la présente invention, comporte avantageusement sous chaque goulotte 17 un couvercle 47 susceptible de s'adapter à une goulotte identique disposé immédiatement en dessous dans une pile d'ustensiles de cuisson selon la présente invention, empilés. Les couvercles 47 peuvent être soudés sur les fonds 25 des goulottes 17 ou être montés flottants par rapport à un tel fond par des moyens élastiques de rappel.

Il est bien entendu que par le procédé selon la présente invention il est possible de réaliser également des ustensiles de cuisson de jambons dépourvus de cloisons transversales. Sur la figure 21, on peut voir un détail d'un tel ustensile dans lequel les cloisons transversales 21 ont été remplacées par des entretoises 33' dont la forme correspond à celle des éléments intermédiaires 33 des cloisons transversales 21. Chaque entretoise 33' comporte, dirigée vers chacune des deux goulottes 17 consécutives qu'elle relie, un élément saillant 3 s'étendant sur la rampe 35 et sur un côté vertical 36. La longueur L des éléments saillants 3 est adaptée à l'épaisseur e3 de la tôle des goulottes 17 notamment au niveau des encoches 31 alors que l'épaisseur e2 de l'entretoise 33' est adaptée à la largeur des encoches 31 des goulottes 17. Deux encoches 31, et par suite deux entretoises 33', sont par exemple éloignées d'une distance supérieure ou égale à 250 mm.

Avantageusement, on dispose les goulottes 17 parallèlement les unes par rapport aux autres à la distance approximative correspondant à leur position relative dans un ustensile de cuisson assemblé, on introduit les entretoises 33' puis on en effectue la soudure. Avantageusement, la soudure s'effectue uniquement au niveau des rampes 35. On pose ensuite les tôles d'extrémité 15 aux deux extrémités des goulottes et on en assure la solidarisation par soudure et/ou brasure. La soudure des tôles 19 complète les cadres périphériques et la pose d'éventuels accessoires termine l'opération d'assemblage d'une structure selon la présente invention.

En variante, on assemble tout d'abord les goulottes 17 avec les plaques d'extrémité 15 puis on introduit les entretoises 33'.

Le procédé selon la présente invention permet de réaliser des structures rigides, notamment des ustensiles de cuisson industrielles de jambons d'une très grande précision, par exemple égales à 1/10e de millimètre dans le positionnement des diverses tôles. Ainsi, tous les ustensiles sont pratiquement identiques, ce qui facilite leur empilement avec une adaptation parfaite des couvercles 47 aux goulottes 17 placées immédiatement en dessous.

De plus en plus, il est possible de réaliser des ustensiles de cuisson de jambons de plus grande dimension (nombre de goulottes supérieures, longueur de goulottes supérieures) susceptible d'être mis en oeuvre avec des cellules de cuisson de dimensions adaptées.

Dans un exemple non limitatif, les tôles 15 ont 5 mm d'épaisseur, 1260 mm de longueur et 105 mm de hauteur ; les tôles 19 ont 5 mm d'épaisseur, 1480 mm de longueur et 100 mm de hauteur ; les tôles formant les goulottes 17 (avant pliage) ont une épaisseur de 3 mm, une longueur de 1480 mm à laquelle s'ajoute de chaque côté 5 mm de la longueur L des éléments saillants 3 et une largeur de 356 mm ; les cloisons transversales 21 ont une épaisseur de 2 mm, une longueur de 1262 mm auxquelles s'ajoute de chaque côté 3,5 mm de longueur des éléments saillants 3 et une hauteur maximale de 117,5 mm.

La présente invention s'applique notamment à la construction mécanique.

La présente invention s'applique principalement à l'industrie agro-alimentaire telle que la cuisson de jambons.

## Revendications

1. Procédé d'assemblage d'une structure rigide comportant au moins une première tôle (7) et une deuxième tôle (1) comportant les étapes consistant à :
a) conférer à une première tôle (7) la forme désirée et ménager un évidemment (9, 9', 9", 31) de réception d'un élément saillant (3) d'une seconde tôle(1) à l'emplacement désiré de contact entre lesdits évidements (9, 9', 9", 31) de la première tôle (7) et un élément saillant (3) de ladite deuxième tôle (1) ;
b) conférer à une deuxième tôle (1) la forme désirée et ménager un élément saillant (3) dont la géométrie est adaptée pour pénétrer dans l'évidement (9, 9', 9", 31) de la première tôle (7), à l'emplacement désiré de contact entre l'élément saillant (3) de la deuxième tôle (1) et l'évidement (9, 9', 9", 31) de la première tôle (7) ;
c) assurer l'assemblage provisoire de la première tôle (7) à la deuxième tôle (1) en emboîtant l'élément saillant (3) de la deuxième tôle (1) dans l'évidement (9, 9', 9", 31) de la première tôle (7) ;
**caractérisé en ce qu'**il comporte l'étape consistant à :
d) assurer la solidarisation définitive de la première tôle (7) et de la deuxième tôle (1) par soudure ou brasure, dans la position relative de ces deux tôles (7, 1) réalisée à l'étape c), d'au moins une partie de la surface de contact (13) entre l'extrémité (5) de la deuxième tôle (1, 17, 21) et la première tôle (7, 15, 19).

2. Procédé d'assemblage d'une structure rigide selon la revendication 1, **caractérisé en ce qu'**on assemble les deux tôles à angle droit.

3. Procédé d'assemblage d'une structure rigide selon l'une quelconque des revendications précédentes, **caractérisé en ce que** l'évidement est une ouverture (9) traversant la première tôle (7) de part en part.

4. Procédé d'assemblage d'une structure rigide selon l'une quelconque des revendications précédentes, **caractérisé en ce que** la longueur (L) de l'élément saillant est inférieure à l'épaisseur (e3) de la première tôle (7).

5. Procédé d'assemblage d'une structure rigide selon l'une quelconque des revendications précédentes, **caractérisé en ce qu'**on muni la deuxième tôle (1) d'un élément saillant (3) à une première extrémité (5) et d'un deuxième élément saillant (3) à une deuxième extrémité (5), chacun des éléments saillants (3) étant emboîté dans un évidement (9, 9', 9", 31) de deux premières tôles (7, 7') différentes.

6. Procédé d'assemblage d'une structure rigide selon l'une quelconque des revendications précédentes, **caractérisé en ce que** les étapes a) et b) sont réalisées par découpe sur un appareil de découpe à commande numérique.

## Patentansprüche

1. Zusammenbauverfahren einer starren Struktur, mit mindestens einem ersten Blech (7) und einem zweiten Blech (1), das aus folgenden Etappen besteht :
a) einem ersten Blech (7) die gewünschte Form verleihen und eine Aufnahmevertiefung (9, 9', 9'', 31) vorsehen für ein aus einem zweiten Blech (1) herausragendes Element (3), an der gewünschten Kontaktstelle zwischen den besagten Vertiefungen (9, 9', 9'', 31) des ersten Blechs (7) und einem aus dem zweiten Blech (1) herausragenden Element (3) ;
b) einem zweiten Blech (1) die gewünschte Form verleihen und ein herausragendes Element (3) vorsehen, dessen Geometrie geeignet ist, um in die Vertiefung (9, 9', 9'', 31) des ersten Blechs (7) einzudringen; an der gewünschten Kontaktstelle zwischen dem herausragenden Element (3) des zweiten Blechs (1) und der Vertiefung (9, 9', 9'', 31) des ersten Blechs (7) ;
c) den provisorischen Zusammenbau des ersten Blechs (7) mit dem zweiten Blech (1) gewährleisten, durch Einklinken des herausragenden Elements (3) des zweiten Blechs (1) in die Vertiefung (9, 9', 9'', 31) des ersten Blechs (7) ;
**dadurch gekennzeichnet, dass** es die folgende Etappe umfasst:
d) den endgültigen Zusammenhalt des ersten Blechs (7) und des zweiten Blechs (1) durch Schweißen oder Löten gewährleisten, in der relativen, in Etappe c) realisierten Position dieser beiden Bleche (7, 1), mindestens eines Teils der Kontaktfläche (13) zwischen dem Ende (5) des zweiten Blechs (1, 17, 21) und dem ersten Blech (7, 15, 19).

2. Zusammenbauverfahren einer starren Struktur nach Anspruch 1, **dadurch gekennzeichnet, dass** man die beiden Bleche im geraden Winkel zusammenbaut.

3. Zusammenbauverfahren einer starren Struktur nach einem der vorherigen Ansprüche, **dadurch gekennzeichnet, dass** die Vertiefung eine das erste Blech (7) von einer Seite zur anderen durchquerende Öffnung (9) ist.

4. Zusammenbauverfahren einer starren Struktur nach einem der vorherigen Ansprüche, **dadurch gekennzeichnet, dass** die Länge (L) des herausragenden Elements kleiner ist als die Dicke (e3) des ersten Blechs (7).

5. Zusammenbauverfahren einer starren Struktur nach einem der vorherigen Ansprüche, **dadurch gekennzeichnet, dass** man das zweite Blech (1) mit einem herausragenden Element (3) an einem ersten Ende (5) und mit einem herausragenden Element (3) an einem zweiten Ende (5) versieht, wobei jedes der herausragenden Elemente (3) in eine Vertiefung (9, 9', 9'', 31) von zwei verschiedenen ersten Blechen (7, 7') eingeklinkt wird.

6. Zusammenbauverfahren einer starren Struktur nach einem der vorherigen Ansprüche, **dadurch gekennzeichnet, dass** die Etappen a) und b) durch Ausstanzen auf einem NC-gesteuerten Stanzgerät durchgeführt werden.

## Claims

1. A method for assembling a rigid structure comprising at least one first metal sheet (7) and one second metal sheet (1) comprising the steps consisting in:
a) giving a first metal sheet (7) the desired shape and making a recess (9, 9', 9'', 31) for receiving a projecting element (3) of a second metal sheet (1) at the desired place of contact between said recesses (9, 9', 9'', 31) in the first metal sheet (7) and a projecting element (3) of said second metal sheet (1);
b) giving a second metal sheet (1) the desired shape and making a projecting element (3), the geometry of which is adapted for entering the recess (9, 9', 9'', 31) in the first metal sheet (7), at the desired place of contact between the projecting element (3) of the second metal sheet (1) and the recess (9, 9', 9'', 31) in the first metal sheet (7);
c) providing the temporary assembly of the first metal sheet (7) with the second metal sheet (1) by fitting the projecting element (3) of the second metal sheet (1) into the recess (9, 9', 9'', 31) in the first metal sheet (7);
**characterised in that** it comprises the step consisting in:
d) providing the final firm attachment of the first metal sheet (7) and the second metal sheet (1) by welding or brazing, in the relative position of these two metal sheets (7, 1) implemented at the step c), of at least part of the surface of contact (13) between the end (5) of the second metal sheet (1, 17, 21) and the first metal sheet (7, 15, 19).

2. A method for assembling a rigid structure according to Claim 1, **characterised in that** the two metal sheets are assembled at right angles.

3. A method for assembling a rigid structure according to either one of the preceding claims, **characterised in that** the recess is an opening (9) passing right through the first metal sheet (7).

4. A method for assembling a rigid structure according to any one of the preceding claims, **characterised in that** the length (L) of the projecting element is less than the thickness (e3) of the first metal sheet (7).

5. A method for assembling a rigid structure according to any one of the preceding claims, **characterised in that** the second metal sheet (1) is provided with a projecting element (3) at a first end (5) and with a second projecting element (3) at a second end (5), each of the projecting elements (3) being fitted into a recess (9, 9', 9'', 31) in two different first metal sheets (7, 7').

6. A method for assembling a rigid structure according to any one of the preceding claims, **characterised in that** the steps a) and b) are implemented by cutting out on a numerically controlled cutting apparatus.
